Europäisches Patentamt

European Patent Office

Office européen des brevets

(11) Veröffentlichungsnummer: **0 364 714**

**A2**

## EUROPÄISCHE PATENTANMELDUNG

(21) Anmeldenummer: **89116304.0**

(51) Int. Cl.⁵: **B60R 21/20**

(22) Anmeldetag: **04.09.89**

(30) Priorität: **19.10.88 DE 3835581**

(43) Veröffentlichungstag der Anmeldung:
**25.04.90 Patentblatt 90/17**

(84) Benannte Vertragsstaaten:
**CH DE ES FR GB IT LI**

(71) Anmelder: **Dr.Ing.h.c. F. Porsche Aktiengesellschaft Porschestrasse 42 D-7000 Stuttgart 40(DE)**

(72) Erfinder: **Metzler, Jürgen, Dipl.-Ing. Waldstrasse 2 D-7560 Gaggenau(DE)**

(54) **Aufprallschutzeinrichtung für einen Insassen eines Kraftfahrzeuges.**

(57) Eine Aufprallschutzeinrichtung für einen Insassen eines Kraftfahrzeuges umfaßt eine vorgefertigte, in eine Ausnehmung eines Armaturenbretts eingesetzte Baueinheit, die sich aus einem Generatorgehäuse, einem Gasgenerator und einem Gaskissen zusammensetzt.

Damit beim Entfalten des Gaskissens ein die Ausnehmung verschließender Deckel nicht die angrenzende Windschutzscheibe beschädigt, ist eine Einrichtung vorgesehen, die die Öffnungsbewegung des Deckels beim Aufblasen des Gaskissens begrenzt.

FIG.1

EP 0 364 714 A2

## Aufprallschutzeinrichtung für einen Insassen eines Kraftfahrzeuges

Die Erfindung betrifft eine Aufprallschutzeinrichtung für einen Insassen eines Kraftfahrzeuges gemäß dem Oberbegriff des Anspruchs 1.

Eine, eine gute Funktion aufweisende Aufprallschutzeinrichtung der eingangs genannten Gattung ist aus der DE-OS 36 05 623 bekannt. Nachteilig an dieser Anordnung ist jedoch, daß beim Aufblasen des Gaskissens der nach oben schwenkende Deckel in Anlage mit der Windschutzscheibe gelangen kann, so daß diese beschädigt und dann ausgetauscht werden muß, was hohe Kosten verursacht.

Aufgabe der Erfindung ist es, an einer Aufprallschutzeinrichtung für den Insassen eines Kraftfahrzeuges solche Vorkehrungen zu treffen, daß bei guter Funktion der Aufprallschutzeinrichtung ein Beschädigen der Windschutzscheibe bzw. angrenzender Bauteile durch den Deckel beim Aufblasen des Gaskissens vermieden wird.

Erfindungsgemäß wird diese Aufgabe durch die kennzeichnenden Merkmale des Anspruchs 1 gelöst. Weitere, die Erfindung in vorteilhafter Weise ausgestaltende Merkmale sind in den Unteransprüchen enthalten.

Die mit der Erfindung hauptsächlich erzielten Vorteile sind darin zu sehen, daß durch die Anordnung einer Einrichtung die Öffnungsbewegung des Deckels beim Entfalten des Gaskissens derart begrenzt wird, daß der Deckel mit Abstand zu angrenzenden Bauteilen (z.B. der Windschutzscheibe) verläuft und diese nicht beschädigen kann. In einfacher Weise wird die Einrichtung durch ein Fangband gebildet, das einerseits mit dem Deckel und andererseits mit einem Ausschußrahmen verbunden ist. Ein weiterer Vorteil des Fangbandes besteht darin, daß damit die ursprünglich nur von der Modullage vorgegebene Luftsackausschußrichtung beeinflußt werden kann.

Ein Ausführungsbeispiel der Erfindung ist in der Zeichnung dargestellt und wird im folgenden näher erläutert.

Es zeigt:

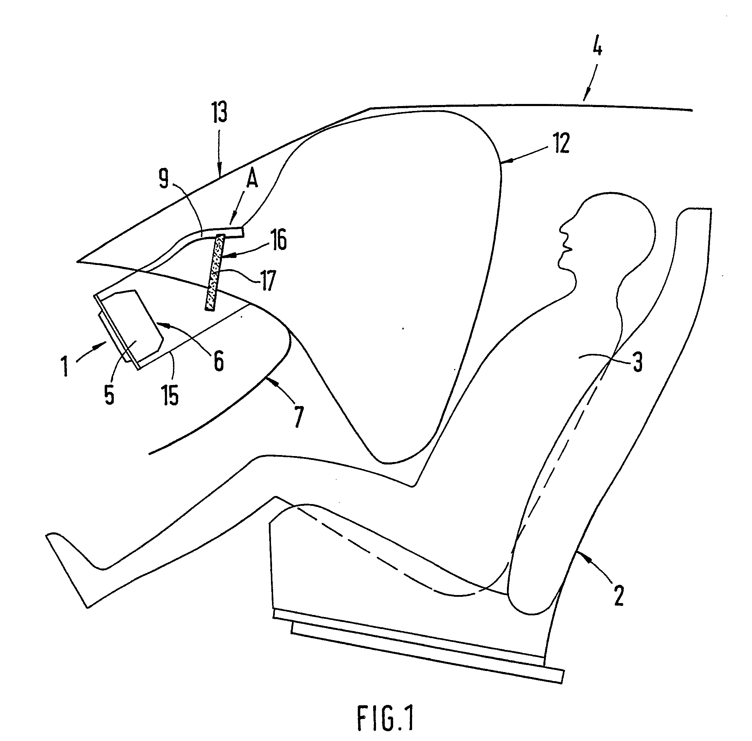

Fig. 1 eine Teilseitenansicht auf ein Kraftfahrzeug mit einer Aufprallschutzeinrichtung für einen Insassen,

Fig. 2 einen Teillängsschnitt durch die Aufprallschutzeinrichtung.

Eine Aufprallschutzeinrichtung 1 für einen auf einem Sitz 2 platznehmenden Insassen 3 eines Kraftfahrzeuges 4 umfaßt eine vorgefertigte, funktionsfähige Baueinheit 5 (Modul), die in eine beifahrerseitig angeordnete Ausnehmung 6 eines Armaturenbretts 7 eingesetzt ist. Die Baueinheit 5 umfaßt in nicht näher dargestellter Weise ein Generatorgehäuse, eine Grundplatte, ein aufblasbares Gaskissen, zumindest einen Gasgenerator und eine mit einer Reißnaht versehene Abdeckung.

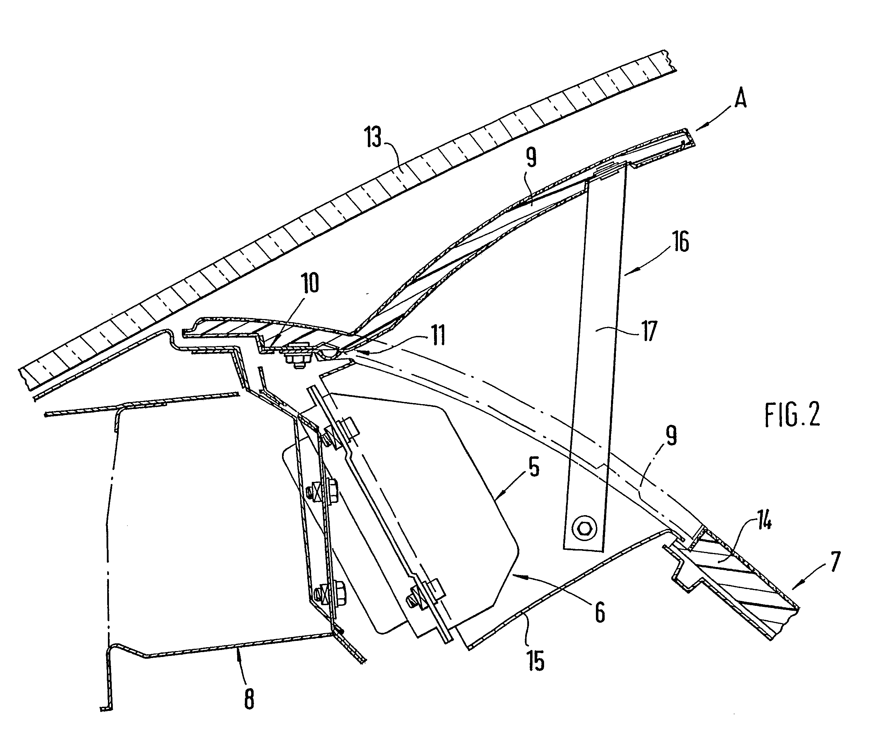

Gemäß Fig. 2 ist die Baueinheit 5 direkt oder unter Vermittlung eines Aufnahmerahmens an einen kastenförmigen Träger 8 des Armaturenbretts 7 befestigt. Die Ausnehmung 6 ist mittels eines Deckels 9 verschließbar. Der Deckel 9 ist benachbart seinem oberen Ende mit einem feststehenden Trägerblech 10 des Armaturenbretts 7 verschraubt und weist benachbart dieser Befestigung eine Sollbiegestelle 11 auf, um die er beim Aufblasen des Gaskissens 12 nach oben hin in Richtung Windschutzscheibe 13 verschwenkt wird.

Zwischen der Baueinheit 5 und einer Armaturenbrettabdeckung 14 erstreckt sich ein kanalförmiger Ausschußrahmen 15, der die Lage des Gaskissens 12 beim Aufblasen definiert.

Damit beim Aufblasen des Gaskissens 12 der Deckel 9 die Windschutzscheibe 13 nicht beschädigt bzw. zerstört, ist eine Einrichtung 16 vorgesehen, die die Öffnungsbewegung des Deckels 9 beim Entfalten des Gaskissens 12 begrenzt. Die Einrichtung 16 wird durch ein Fangband 17 gebildet, das einerseits mit dem Deckel 9 und andererseits mit dem Armaturenbrett 7, einem Aufnahmerahmen, dem Ausschußrahmen 15 oder der Karosseriestruktur verbunden ist. Das Fangband 17 ist gemäß Fig. 2 enseitig mit dem Deckel 9 und dem Ausschußrahmen 15 verschraubt oder vernietet.

Vorzugsweise wird als Fangband 17 ein herkömmliches Gurtband aus Polyamid oder dgl. verwendet. Es besteht die Möglichkeit, in Querrichtung gesehen, an beiden seitlich außenliegenden Bereichen des Deckels 9 je ein separates Fangband 17 anzuordnen. Es kann aber auch ein einziges Fangband 17 vorgesehen sein, das über die gesamte Quererstreckung des Deckels 9 verläuft, wobei endseitig die Abstellungen des Fangbandes 17 mit dem Ausschußrahmen 15 verbunden sind. Die Länge des Fangbandes 17 richtet sich jeweils nach den Einbauverhältnissen von Aufprallschutzeinrichtung 1 und Windschutzscheibe 13.

Gemäß Fig. 2 verläuft der geöffnete Deckel A etwa parallel und mit Abstand zur angrenzenden Windschutzscheibe 13.

Die Einrichtung 16 könnte aber auch durch einen Fanghaken oder dgl. gebildet werden, der die Öffnungsbewegung des Deckels 9 beim Aufblasen des Gaskissens 12 begrenzt.

## Ansprüche

1. Aufprallschutzeinrichtung für einen Insassen eines Kraftfahrzeuges, die eine vorgefertigte, in eine Ausnehmung eines Armaturenbretts eingesetzte Baueinheit umfaßt, die sich im wesentlichen aus einem Generatorgehäuse, einem Gasgenerator und einem Gaskissen zusammensetzt, wobei beim Entfalten des Gaskissens ein die Ausnehmung verschließender Deckel vorzugsweise nach oben hin in Richtung einer Windschutzscheibe verschwenkt wird, dadurch gekennzeichnet, daß eine Einrichtung (16) vorgesehen ist, die die Öffnungsbewegung des Deckels (9) beim Entfalten des Gaskissens (12) begrenzt.

2. Aufprallschutzeinrichtung nach Anspruch 1, dadurch gekennzeichnet, daß die Einrichtung (16) durch ein Fangband (17) gebildet wird, das einerseits mit dem Deckel (9) und andererseits mit dem Armaturenbrett (7), einem Aufnahmerahmen, einem Ausschußrahmen (15) oder der Karosseriestruktur verbunden ist.

3. Aufprallschutzeinrichtung nach Anspruch 1, dadurch gekennzeichnet, daß das Fangband (17) endseitig mit dem Deckel (9) und dem Ausschußrahmen (15) verschraubt bzw. vernietet ist.

4. Aufprallschutzeinrichtung nach Anspruch 1, dadurch gekennzeichnet, daß der geöffnete Deckel (9) etwa parallel und mit Abstand zur angrenzenden Windschutzscheibe (13) verläuft.

FIG.1

FIG.2